(19) Europäisches Patentamt / European Patent Office / Office européen des brevets

(11) **EP 4 439 164 A1**

(12) **EUROPEAN PATENT APPLICATION**
published in accordance with Art. 153(4) EPC

(43) Date of publication:
**02.10.2024 Bulletin 2024/40**

(21) Application number: **22898531.3**

(22) Date of filing: **21.11.2022**

(51) International Patent Classification (IPC):
**G02F 1/1339** (2006.01)    **C08F 2/44** (2006.01)
**G02F 1/19** (2019.01)

(52) Cooperative Patent Classification (CPC):
**C08F 2/44; G02F 1/1339; G02F 1/19**

(86) International application number:
**PCT/JP2022/043024**

(87) International publication number:
**WO 2023/095748 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 JP 2021191844**

(71) Applicant: **SEKISUI CHEMICAL CO., LTD.**
**Osaka-shi**
**Osaka**
**530-8565 (JP)**

(72) Inventor: **ABE, Hirotaka**
**Kouka-shi, Shiga 528-8585 (JP)**

(74) Representative: **Ter Meer Steinmeister & Partner**
**Patentanwälte mbB**
**Nymphenburger Straße 4**
**80335 München (DE)**

(54)    **COLORED RESIN PARTICLE AND DIMMER LAMINATE**

(57)    Provided are colored resin particles capable of controlling a gap between base materials with high accuracy and suppressing light transmission. The colored resin particle according to the present invention includes a resin particle and a colorant, wherein when lightness in an L*a*b* color system in accordance with JIS Z 8781-4: 2013 is measured for each of the colored resin particle before light irradiation and the colored resin particle after light irradiation irradiated with light at an integrated light amount of 540 MJ/m$^2$, a lightness $L_0$* of the colored resin particle before light irradiation is 0 or more and 60 or less, and a ratio of the lightness $L_0$* of the colored resin particle before light irradiation to a lightness $L_{540}$* of the colored resin particle after light irradiation is 0.3 or more.

[FIG. 1.]

**Description**

**TECHNICAL FIELD**

The present invention relates to a colored resin particle and a dimmer laminate using the colored resin particles.

**BACKGROUND ART**

Dimming materials such as dimming glass and dimming films are materials that has a property that light transmittance changes depending on whether an electric field is applied or not, and can adjust an amount of incident light. The methods of dimming materials are roughly classified into a Suspended Particle Device (SPD) method and a Polymer Dispersed Liquid Crystal (PDLC) method depending on an action mechanism that changes the light transmittance.

The SPD method is a method for dispersing a light-modulating suspension in a resin matrix. The light-modulating suspension includes light-modulating particles. The light-modulating particles can respond to an electric field. In the SPD method, the light-modulating particles dispersed in the light-modulating suspension absorb, scatter or reflect light by Brownian motion in the state where no electric field is applied; thus, incident light is not transmitted through the dimming material. When the electric field is applied, the light-modulating particles are polarized to be aligned in a direction parallel to the electric field, so that incident light is transmitted through the dimming material. Thus, in the SPD method, the light transmittance can be adjusted by utilizing polarization orientation of the light-modulating particles.

The PDLC method is a method for dispersing liquid crystal in a resin matrix. As a form of the PDLC method, there are, for example, a form in which the liquid crystal and the resin matrix are dispersed as a continuous phase and a form in which the liquid crystal is dispersed as a liquid crystal capsule in the resin matrix. In a state where no electric field is applied, alignment of liquid crystal molecules is not uniform, so that incident light is scattered in the dimming material due to a difference in refractive index between the resin matrix and the liquid crystal, and an opaque state is observed. When the electric field is applied, the liquid crystal molecules are aligned in a direction parallel to the electric field. At this time, since the refractive indexes of the resin matrix and the liquid crystal are equal, the incident light can be transmitted through the dimming material, and a transparent state is observed. Thus, in the PDLC method, light transmittance is adjusted by utilizing alignment of liquid crystal molecules.

When a dimmer laminate is produced using the dimming material, a spacer may be used to control a gap between two base materials. Examples of the spacer include resin particles. As an example of such resin particles, the following Patent Document 1 discloses fine particles (resin particles) in which particles containing a crosslinkable polymer material are coated with a fluorine-based resin or a silicon-based resin.

**Related Art Document**

**Patent Document**

Patent Document 1: JP H10-010540 A

**SUMMARY OF THE INVENTION**

**PROBLEMS TO BE SOLVED BY THE INVENTION**

In the conventional resin particle as described in Patent Document 1, when the resin particle is used as a spacer, light transmission where light is transmitted from the resin particle may occur. Such a light transmission phenomenon has a problem of causing a decrease in display quality such as a decrease in contrast and a white spot.

An object of the present invention is to provide colored resin particles capable of controlling a gap between base materials with high accuracy and suppressing light transmission. In addition, an object of the present invention is to provide a dimmer laminate capable of controlling a gap between base materials with high accuracy and suppressing light transmission.

**MEANS FOR SOLVING THE PROBLEMS**

According to a broad aspect of the present invention, there is provided a colored resin particle including a resin particle and a colorant, wherein when lightness in an L*a*b* color system in accordance with JIS Z 8781-4: 2013 is measured for each of the colored resin particle before light irradiation and the colored resin particle after light irradiation irradiated with light at an integrated light amount of 540 MJ/m$^2$, a lightness $L_0^*$ of the colored resin particle before light irradiation is 0 or more and 60 or less, and a ratio of the lightness $L_0^*$ of the colored resin particle before light irradiation

to a lightness $L_{540}*$ of the colored resin particle after light irradiation is 0.3 or more.

In a specific aspect of the colored resin particle according to the present invention, a 20% K value is 100 N/mm$^2$ or more and 5000 N/mm$^2$ or less.

In a specific aspect of the colored resin particle according to the present invention, the volume resistivity is 1.0 × 10$^9$ Ω·cm or more.

In a specific aspect of the colored resin particle according to the present invention, an average particle diameter is 1 um or more and 150 um or less.

In a specific aspect of the colored resin particle according to the present invention, particles having a particle diameter of 1.2 times or more the average particle diameter are not included, or the particles having a particle diameter of 1.2 times or more the average particle diameter are included in an amount of 1000 ppm or less.

In a specific aspect of the colored resin particle according to the present invention, a CV value of the particle diameter is 10% or less.

In a specific aspect of the colored resin particles according to the present invention, the colorant contains an organic black pigment, titanium black particles, or carbon black particles.

In a specific aspect of the colored resin particle according to the present invention, the colored resin particle contains the colorant in a content of 20% by weight or less in 100% by weight of the colored resin particles.

In a specific aspect of the colored resin particle according to the present invention, a specific gravity is 1.5 or less.

In a specific aspect of the colored resin particle according to the present invention, the colored resin particle contains a component derived from a polyfunctional (meth)acrylate compound.

In a specific aspect of the colored resin particle according to the present invention, the colored resin particle contains a component derived from a polyfunctional (meth)acrylate compound in a content of 50% by weight or more in 100% by weight of the colored resin particles.

In a specific aspect of the colored resin particle according to the present invention, the colored resin particle is used as a spacer.

In a specific aspect of the colored resin particle according to the present invention, the colored resin particle is used as a spacer in a dimmer laminate.

According to a broad aspect of the present invention, there is provided a dimmer laminate including a first base material, a second base material, and a dimming layer disposed between the first base material and the second base material, in which the dimming layer contains the colored resin particles described above.

## EFFECT OF THE INVENTION

The colored resin particle according to the present invention contains a resin particle and a colorant. In the colored resin particle according to the present invention, when the lightness in the L*a*b* color system in accordance with JIS Z 8781-4: 2013 is measured for each of the colored resin particle before light irradiation and the colored resin particle after light irradiation irradiated with light at an integrated light amount of 540 MJ/m$^2$, the lightness $L_0*$ of the colored resin particle before light irradiation is 0 or more and 60 or less. In the colored resin particle according to the present invention, in the above measurement, the ratio of the lightness $L_0*$ of the colored resin particle before light irradiation to the lightness $L_{540}*$ of the colored resin particle after light irradiation is 0.3 or more. Since the colored resin particle according to the present invention is provided with the above configuration, the gap between the base materials can be controlled with high accuracy, and light transmission can be suppressed.

## BRIEF DESCRIPTION OF DRAWINGS

[Fig. 1] Fig. 1 is a sectional view schematically showing a colored resin particle according to a first embodiment of the present invention.

[Fig. 2] Fig. 2 is a sectional view schematically showing a PDLC-type dimmer laminate containing the colored resin particles according to the first embodiment of the present invention.

[Fig. 3] Fig. 3 is a sectional view schematically showing an SPD-type dimmer laminate containing the colored resin particles according to the first embodiment of the present invention.

## MODES FOR CARRYING OUT THE INVENTION

Hereinafter, the present invention will be described in detail. In the present specification, for example, " (meth)acrylate" means one or both of "acrylate" and "methacrylate", and " (meth) acryl" means one or both of "acryl" and "methacryl".

(Colored resin particle)

The colored resin particle according to the present invention contains a resin particle and a colorant. In the colored resin particle according to the present invention, when the lightness in the L*a*b* color system in accordance with JIS Z 8781-4: 2013 is measured for each of the colored resin particle before light irradiation and the colored resin particle after light irradiation irradiated with light at an integrated light amount of 540 MJ/m$^2$, the lightness $L_0^*$ of the colored resin particle before light irradiation is 0 or more and 60 or less. In the colored resin particle according to the present invention, in the above measurement, the ratio of the lightness $L_0^*$ of the colored resin particle before light irradiation to the lightness $L_{540}^*$ of the colored resin particle after light irradiation is 0.3 or more.

Since the colored resin particle according to the present invention is provided with the above configuration, the gap between the base materials can be controlled with high accuracy, and light transmission can be suppressed.

Conventional colored particles colored with a dye may be discolored by long-term exposure to deteriorate a light shielding property, and light transmission may occur. On the other hand, since the colored resin particle according to the present invention is provided with the above configuration, light transmission can be suppressed for a long period of time even when exposed for a long period of time.

From the viewpoint of more effectively suppressing light transmission, in the above measurement, the lightness $L_0^*$ of the colored resin particle before light irradiation is preferably 1 or more, more preferably 3 or more, and preferably 55 or less, more preferably 40 or less, still more preferably 30 or less.

From the viewpoint of more effectively suppressing light transmission, in the above measurement, the lightness $L_{540}^*$ of the colored resin particle after light irradiation is preferably 1 or more, more preferably 3 or more, still more preferably 4 or more, and preferably 60 or less, more preferably 50 or less, still more preferably 40 or less.

From the viewpoint of more effectively suppressing light transmission, in the above measurement, the ratio ($L_0^*/L_{540}^*$) of the lightness $L_0^*$ of the colored resin particle before light irradiation to a lightness $L_{540}^*$ of the colored resin particle after light irradiation is preferably 0.4 or more, more preferably 0.5 or more, still more preferably 0.6 or more, and particularly preferably 0.8 or more. The upper limit of the ratio ($L_0^*/L_{540}^*$) is not particularly limited. The ratio ($L_0^*/L_{540}^*$) may be 1.0 or less.

The lightness $L_0^*$ of the colored resin particle before light irradiation and the lightness $L_{540}^*$ of the colored resin particle after light irradiation can be measured as follows. A plate-shaped sample having the same composition as that of the colored resin particle is prepared. The plate-shaped sample is irradiated with light at an illuminance of 255 W/m$^2$ for 588 hours (integrated light amount: 540 MJ/m$^2$). For the sample before light irradiation and arbitrary 10 points of the sample after light irradiation, the lightness is measured with a measurement range set to a circle having a diameter of 8 mm using a color difference meter, and the average value lightness $L_0^*$ and the lightness $L_{540}^*$ are obtained. Examples of the color difference meter include "TES-3250" manufactured by SATOTECH (Sato Shouji Inc.).

The lightness $L_0^*$ of the colored resin particle before light irradiation and the lightness $L_{540}^*$ of the colored resin particle after light irradiation may be measured for each colored resin particle. The colored resin particles before and after light irradiation are supported on an adhesive tape, for arbitrary 10 points of the colored resin particles, the lightness is measured with a measurement range set to a circle having a diameter of 8 mm using a color difference meter, and each average value is defined as lightness $L_0^*$ and the lightness $L_{540}^*$. Examples of the color difference meter include "TES-3250" manufactured by SATOTECH (Sato Shouji Inc.). The colored resin particles after light irradiation are obtained by irradiating the colored resin particles with light at an illuminance of 255 W/m$^2$ for 588 hours (integrated light amount: 540 MJ/m$^2$) using a sunshine carbon arc lamp. The colored resin particles after light irradiation may be obtained by irradiating the colored resin particles with light at an illuminance of 180 W/m$^2$ for 830 hours (integrated light amount: 540 MJ/m$^2$) using a super xenon lamp. The colored resin particles after light irradiation may be obtained by irradiating the colored resin particles with light at an illuminance of 60 W/m$^2$ for 2500 hours (integrated light amount: 540 MJ/m$^2$) using a xenon lamp.

Examples of a method of easily controlling the lightness $L_0^*$ of the colored resin particles before light irradiation and the lightness $L_{540}^*$ of the colored resin particles after light irradiation within suitable ranges include a method of adjusting the type and content of the colorant.

From the viewpoint of more effectively suppressing light transmission, a visible light transmittance of the colored resin particle is preferably 40% or less, more preferably 20% or less, and still more preferably 10% or less.

The visible light transmittance of the colored resin particle can be measured as follows. A plate-shaped sample having the same composition as that of the colored resin particle is prepared, and spectrometry or the like is performed to measure the visible light transmittance in accordance with ISO 13837: 2008. The visible light transmittance can also be measured by a method conforming to JIS K 6714 standard, or the like.

The volume resistivity of the colored resin particle is preferably $1.0 \times 10^9$ Ω·cm or more, more preferably $1.0 \times 10^{10}$ Ω·cm or more, still more preferably $1.0 \times 10^{11}$ Ω·cm or more, and particularly preferably $1.0 \times 10^{12}$ Ω·cm or more. When the volume resistivity of the colored resin particle is equal to or more than the above lower limit, insulation reliability of the colored resin particle can be enhanced, and as a result, conduction reliability of the obtained dimmer laminate can be enhanced. The upper limit of the volume resistivity of the colored resin particle is not particularly limited. The volume resistivity of the colored resin particle may be $1.0 \times 10^{20}$ $\Omega \cdot$cm or less, or may be $1.0 \times 10^{18}$ $\Omega \cdot$cm or less.

The volume resistivity of the colored resin particle can be measured as follows. Using a powder resistance measurement system (for example, "powder resistance measurement system MCP-PD 51 type" manufactured by Mitsubishi Chemical Analytech Co., Ltd.), a load of 0 kN to 20 kN is applied to the colored resin particles filled in a probe by 4 kN increments using a hydraulic pump. The volume resistivity is measured for the colored resin particles in a state where each load (0 kN, 4 kN, 8 kN, 12 kN, 16 kN, and 20 kN) is applied, and the lowest value is defined as the volume resistivity of the colored resin particles.

A 20% K value of the colored resin particle is preferably 100 N/mm$^2$ or more, more preferably 700 N/mm$^2$ or more, still more preferably 1000 N/mm$^2$ or more, and preferably 5000 N/mm$^2$ or less, more preferably 4000 N/mm$^2$ or less, still more preferably 3000 N/mm$^2$ or less. When the 20% K value of the colored resin particles is equal to or more than the above lower limit and equal to or less than the above upper limit, the gap between the substrates can be controlled with higher accuracy, and scratches on the substrate can be prevented. When the 20% K value of the colored resin particles is equal to or more than the above lower limit and equal to or less than the above upper limit, breakage of the colored resin particles can be suppressed, so that outflow of the colorant in the colored resin particles can be suppressed, and occurrence of a short circuit can be suppressed. As a result, the conduction reliability of the obtained dimmer laminate can be enhanced.

The 20% K value of the colored resin particle can be measured as follows. Using a micro compression testing machine, the colored resin particles are compressed at a smooth indenter end face of a cylinder (diameter of 50 $\mu$m, made of diamond) under the conditions of loading at 25°C and a maximum test load of 20 mN over 60 seconds. The load value (N) and compression displacement (mm) at this time are measured. From the obtained measured value, the 20% K value can be obtained by the following formula. As the micro compression testing machine, for example, "Fischer Scope H-100" manufactured by FISCHER INSTRUMENTS K.K., or the like is used.

$$\text{20\% K value } (\text{N/mm}^2) = (3/2^{1/2}) \cdot F \cdot S^{-3/2} \cdot R^{-1/2}$$

F: Load value (N) when the colored resin particle is 20% compressed and deformed
S: Compression displacement (mm) when the colored resin particle is 20% compressed and deformed
R: Radius of colored resin particle (mm)

Examples of the method of easily controlling the 20% K value of the colored resin particle to a suitable range include a method of adjusting a crosslinking density of the colored resin particle by adjusting the number of polymerizable functional groups and the molecular weight of the material (polymerizable monomer) for forming the resin particles or adjusting the type and content of the colorant.

Since the colored resin particles are spherical, a roll-to-roll process can be applied when manufacturing the dimmer laminate, and the manufacturing cost of the dimmer laminate can be reduced. The spherical shape is not limited to a perfect spherical shape, and includes a substantially spherical shape, for example, a shape having an aspect ratio (major axis/minor axis) of 1.5 or less.

From the viewpoint of enhancing practicality, appropriately setting the gap, and effectively suppressing light transmission, the average particle diameter of the colored resin particles is preferably 1 um or more, more preferably 3 um or more, still more preferably 10 pm or more, and preferably 150 um or less, more preferably 100 um or less, still more preferably 50 um or less.

The particle diameter of the colored resin particle means a diameter when the colored resin particle is a true sphere, and when the colored resin particle has a shape other than a true sphere, the particle diameter of the colored resin particle means a diameter when it is assumed that the colored resin particle is a true sphere corresponding to the volume. The particle diameter of the colored resin particle is preferably an average particle diameter, and more preferably a number average particle diameter. The particle diameter of the colored resin particle can be measured by an arbitrary particle size distribution measuring apparatus. For example, the particle diameter can be measured using a particle size distribution measuring apparatus using principles such as laser light scattering, electric resistance change, and image analysis after imaging can be used. In addition, specific examples of a method for measuring the particle diameter of the colored resin particle include a method for measuring the particle diameter of about 100,000 colored resin particles using a particle size distribution measuring device ("Multisizer 4" manufactured by Beckman Coulter, Inc.) and measuring the average value.

From the viewpoint of controlling the gap between the substrates with higher accuracy, it is preferable that the colored resin particles do not contain particles (colored resin particles) having a particle diameter of 1.2 times or more the average particle diameter or contain particles (colored resin particles) having a particle diameter of 1.2 times or more the average particle diameter in an amount of 1000 ppm or less. From the viewpoint of controlling the gap between the substrates with higher accuracy, the content of particles (colored resin particles) having a particle diameter of 1.2 times or more the average particle diameter is preferably 1000 ppm or less, more preferably 500 ppm or less, still more preferably 100 ppm or less, and particularly preferably 50 ppm or less. From the viewpoint of controlling the gap between the substrates with higher accuracy, the content of particles (colored resin particles) having a particle diameter of 1.2 times or more the average particle diameter is most preferably 0 ppm (uncontained).

The content of particles (colored resin particles) having a particle diameter of 1.2 times or more the average particle diameter can be measured as follows. The colored resin particles are filtered through a filter having a pore diameter of 1.15 times the average particle diameter, the colored resin particles remaining on the filter are observed with an optical microscope, and the colored resin particles having a pore diameter of 1.2 times or more the average particle diameter are counted. The content of particles (colored resin particles) having a particle diameter of 1.2 times or more the average particle diameter is calculated by dividing the counted number of colored resin particles by the total number of filtered colored resin particles.

From the viewpoint of controlling the gap between the substrates with higher accuracy, the CV value of the particle diameter of the colored resin particles is preferably 2.0% or more, more preferably 2.5% or more, and preferably 10% or less, more preferably 8.0% or less.

The CV value (variation coefficient) of the particle diameter of the colored resin particles can be measured as follows.

$$CV \text{ value (\%)} = (\rho/Dn) \times 100$$

$\rho$: Standard deviation of particle diameter of the colored resin particle
Dn: Average value of particle diameter of the colored resin particle

From the viewpoint of controlling the gap between the substrates with higher accuracy, the aspect ratio of the colored resin particles is preferably 1.5 or less, and more preferably 1.3 or less. The aspect ratio indicates a major axis/minor axis. The aspect ratio is preferably determined by observing 10 arbitrary colored resin particles with an electron microscope or an optical microscope and, provided that the maximum diameter and a minimum diameter are a major axis length and a minor axis length, respectively, calculating an average value of the major axis length/minor axis length of each spherical colored resin particle descried above. A lower limit of the aspect ratio of the colored resin particles is not particularly limited. The aspect ratio of the colored resin particles may be 1.0 or more or 1.1 or more.

From the viewpoint of improving handleability of the resulting dimming material and dimmer laminate, the specific gravity of the colored resin particles is preferably 1.5 or less, more preferably 1.4 or less, and still more preferably 1.3 or less. The lower limit of the specific gravity of the colored resin particles is not particularly limited. The specific gravity of the colored resin particles may be 1.0 or more, or may be 1.1 or more.

The colored resin particles according to the present invention are suitably used as a spacer. The colored resin particles according to the present invention are particularly suitably used as a spacer in a dimmer laminate. The colored resin particles may be used as a spacer for dimming glass or a spacer for dimming film. The colored resin particles are preferably used as a spacer for dimming glass or a spacer for dimming film.

Hereinafter, each component of the colored resin particle will be described in detail.

<Resin particle>

The colored resin particles include resin particles. The colored resin particles and the resin particles contain a resin. The colored resin particles and the resin particles preferably contain a polymer. The polymer is obtained by polymerizing a polymerization component. The colored resin particles and the resin particles preferably contain a component derived from the polymerization component. The colored resin particles and the resin particles preferably contain a polymer of the polymerization component.

Examples of the resin for forming the resin particle include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polycarbonate, polyamide, phenol formaldehyde resin, melamine formaldehyde resin, benzoguanamine formaldehyde resin, urea formaldehyde resin, phenol resin, melamine resin, benzoguanamine resin, urea resin, epoxy resin, unsaturated polyester resin, saturated polyester resin, polyethylene terephthalate, polysulfone, polyphenylene oxide, polyacetal, polyimide, polyamideimide, polyether ether ketone, polyether sulfone, and divinylbenzene copolymer. The divinylbenzene polymer may be a divinylbenzene copolymer. Examples of the divinylbenzene copolymer include divinylbenzene-styrene copolymer and divinylbenzene-(meth)acrylate copolymer. Since the 20% K value of the resin particle can be easily controlled within a suitable range, the resin for forming the resin particle is preferably a polymer obtained by polymerizing one or more polymerizable monomers (polymerization components) having an ethylenically unsaturated group.

When the resin particle is obtained by polymerizing a polymerizable monomer having an ethylenically unsaturated group, examples of the polymerizable monomer having an ethylenically unsaturated group include non-crosslinkable monomers and crosslinkable monomers.

Examples of the non-crosslinkable monomers include, as a vinyl compound, styrene monomers such as styrene, α-methyl styrene, and chlorostyrene; vinyl ether compounds such as methyl vinyl ether, ethyl vinyl ether, propyl vinyl ether, 1,4-butanediol divinyl ether, cyclohexanedimethanol divinyl ether, and diethylene glycol divinyl ether; an acid vinyl ester compound such as vinyl acetate, vinyl butylate, vinyl laurate, and vinyl stearate; and a halogen-containing monomer such as vinyl chloride, and vinyl fluoride; as a (meth)acrylic compound, an alkyl (meth)acrylate compound such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; an oxygen atom-containing (meth)acrylate compound such as 2-hydroxyethyl (meth)acrylate, glycerol (meth)acrylate, polyoxyethylene (meth)acrylate, and glycidyl (meth)acrylate; a nitrile-containing monomer such as (meth)acrylonitrile; and a halogen-containing (meth)acrylate compound such as trifluoromethyl (meth)acrylate, and pentafluoroethyl (meth)acrylate; as an α-olefin compound, an olefin compound such as diisobutylene, isobutylene, LINEALENE, ethylene, and propylene; and as a conjugated diene compound, isoprene, butadiene, and the like.

Examples of the crosslinkable monomer include, as a vinyl compound, a vinyl-based monomer such as divinylbenzene, 1,4-divinyloxybutane, and divinyl sulfone; as a (meth)acrylic compound, a polyfunctional (meth)acrylate compound such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol tetra(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di(meth)acrylate; as an allyl compound, triallyl (iso)cyanurate, triallyl trimellitate, diallyl phthalate, diallyl acrylamide, and diallyl ether; as a silane compound, a silane alkoxide compound such as tetramethoxysilane, tetraethoxysilane, triethylsilane, t-butyldimethylsilane, methyltrimethoxysilane, methyltriethoxysilane, ethyltrimethoxysilane, ethyltriethoxysilane, isopropyltrimethoxysilane, isobutyltrimethoxysilane, cyclohexyl trimethoxysilane, n-hexyltrimethoxysilane, n-octyltriethoxysilane, n-decyltrimethoxysilane, phenyltrimethoxysilane, dimethyldimethoxysilane, dimethyidiethoxysilane, diisopropyldimethoxysilane, trimethoxysilyl styrene, γ-(meth) acryloxypropyltrimethoxysilane, 1,3-divinyltetramethyldisiloxane, methylphenyldimethoxysilane, and diphenyidimethoxysilane; a polymerizable double bond-containing silane alkoxide such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyl trimethoxysilane, 3-methacryloxypropylmethyldiethoxysilane, 3-methacryloxypropyl triethoxy silane, and 3-acryloxypropyltrimethoxysilane; a cyclic siloxane such as decamethylcyclopentasiloxane; a modified (reactive) silicone oil such as one-terminal modified silicone oil, both-terminal silicone oil, and side-chain type silicone oil; and a carboxyl group-containing monomer such as (meth)acrylic acid, maleic acid, and maleic anhydride.

The resin particle can be obtained by polymerizing the polymerizable monomer having an ethylenically unsaturated group. The polymerization method is not particularly limited, and the polymerizable monomer can be polymerized by known methods such as radical polymerization, ionic polymerization, polycondensation (condensation polymerization), addition condensation, living polymerization, and living radical polymerization.

The resin particles can be easily obtained by performing radical polymerization or the like using the polymerizable monomer having the ethylenically unsaturated group. For example, the resin particles can be obtained by a method for suspension polymerization in the presence of a radical polymerization initiator, and a seed polymerization method and dispersion polymerization method as a method for swelling and polymerizing monomers together with a radical polymerization initiator using non-crosslinked seed particles.

From the viewpoint of controlling the gap between the substrates with higher accuracy, the polymerization component preferably contains a polyfunctional (meth)acrylate compound. That is, from the viewpoint of controlling the gap between the substrates with higher accuracy, the colored resin particles and the resin particles preferably contain a component derived from a polyfunctional (meth)acrylate compound.

The polyfunctional (meth)acrylate compound may be a bifunctional (meth)acrylate compound, a trifunctional (meth)acrylate compound, a trifunctional or higher (meth)acrylate compound, a tetrafunctional (meth)acrylate compound, or a tetrafunctional or higher (meth)acrylate compound. Only one kind of the polyfunctional (meth)acrylate compound may be used alone, or two or more kinds thereof may be used in combination.

From the viewpoint of easily controlling the 20% K value of the colored resin particle within a suitable range, the colored resin particles and the resin particles preferably contain a bifunctional (meth)acrylate compound or a trifunctional (meth)acrylate compound.

The polyfunctional (meth)acrylate compound is preferably polytetramethylene glycol di (meth)acrylate or dipentaerythritol tetra (meth)acrylate.

The content of the component derived from the polyfunctional (meth)acrylate compound in 100% by weight of the colored resin particles is preferably 10% by weight or more, more preferably 50% by weight or more, still more preferably 55% by weight or more, and particularly preferably 60% by weight or more, and is preferably 95% by weight or less, more preferably 90% by weight or less, and still more preferably 80% by weight or less. When the content of the component derived from the polyfunctional (meth)acrylate compound is equal to or more than the above lower limit and equal to or less than the above upper limit, the gap between the substrates can be controlled with higher accuracy. From the viewpoint of controlling the gap between the substrates with higher accuracy, it is preferable that the colored resin particles contain the component derived from a polyfunctional (meth)acrylate compound in an amount of 50% by weight or more in 100% by weight of the colored resin particles.

The content of the component derived from the polyfunctional (meth)acrylate compound in 100% by weight of the resin particles is preferably 10% by weight or more, more preferably 50% by weight or more, still more preferably 60% by weight or more, and particularly preferably 65% by weight or more, and is preferably 95% by weight or less, more preferably 90% by weight or less, and still more preferably 80% by weight or less. When the content of the component derived from the polyfunctional (meth)acrylate compound is equal to or more than the above lower limit and equal to or less than the above upper limit, the gap between the substrates can be controlled with higher accuracy.

<Colorant>

The colored resin particles contain a colorant. The colorant may be disposed in the resin particle or may be disposed on the surface of the resin particle. From the viewpoint of enhancing the conduction reliability of the obtained dimmer laminate, the colorant is preferably disposed in the resin particles. The colorant is preferably contained in the resin particles.

Examples of the colorant include inorganic particles, dyes, and pigments. One kind of the colorants may be used alone, and two or more kinds thereof may be used in combination.

Examples of the inorganic particles include carbon black particles, carbon nanotube particles, titanium black particles, graphene particles, iron oxide particles, zinc oxide particles, calcium carbonate particles, alumina particles, kaolin clay particles, calcium silicate particles, magnesium oxide particles, magnesium hydroxide particles, aluminum hydroxide particles, magnesium carbonate particles, talc particles, feldspar powder particles, mica particles, barite particles, barium carbonate particles, titanium oxide particles, silica particles, and glass beads. The inorganic particles are preferably carbon black particles or titanium black particles.

The average particle diameter of the inorganic particles is preferably 0.01 um or more, more preferably 0.5 um or more, and preferably 100 um or less, more preferably 50 um or less, still more preferably 10 um or less. The average particle diameter indicates a weight average particle diameter. The average particle diameter can be measured by a dynamic light scattering method using a laser as a light source using a light scattering measuring device. Examples of the light scattering measuring device include "DLS-6000AL" manufactured by Otsuka Electronics Co., Ltd.

Examples of the dye include pyrene-based dyes, aminoketone-based dyes, anthraquinone-based dyes, and azo-based dyes.

Examples of the pyrene-based dye include Solvent Green 5 (CAS79869-59-3) and Solvent Green 7 (CAS6358-69-6).

Examples of the aminoketone-based dye include Solvent Yellow 98 (CAS12671-74-8), Solvent Yellow 85 (CAS12271-01-1), Solvent Red 179 (CAS8910-94-5), and Solvent Red 135 (CAS71902-17-5).

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6), and Disperse Blue 214 (CAS104491-84-1).

Examples of the azo-based dyes include Solvent Yellow 30 (CAS3321-10-4), Solvent Red 164 (CAS70956-30-8), and Disperse Blue 146 (CAS88650-91-3).

The colorant preferably contains a pigment. In this case, when the colored resin particles are used as a spacer, the spacer is hardly discolored even when exposed for a long period of time, and light transmission can be suppressed for a long period of time. Even if the colored resin particles are broken and the colorant inside flows out, the occurrence of a short circuit can be suppressed. As a result, the conduction reliability of the obtained dimmer laminate can be enhanced.

The pigment may be an organic pigment or an inorganic pigment. The organic pigment may or may not have a metal atom. The pigment may be a red pigment, a blue pigment, a yellow pigment, or a black pigment. One kind of the pigments may be used alone, and two or more kinds thereof may be used in combination.

The pigment is more preferably an organic pigment, more preferably a black pigment, and still more preferably an organic black pigment from the viewpoint of more effectively suppressing light transmission for a long period of time, effectively suppressing discoloration, and enhancing the conduction reliability of the resulting dimmer laminate.

Examples of the organic black pigment include anthraquinone-based pigments, anthanthrone-based pigments, dianthraquinonyl-based pigments, anthrapyrimidine-based pigments, flavanthrone-based pigments, diketopyrrolopyrrole-based pigments, quinacridone-based pigments, diketopyrrolopyrrole based pigments, indigo-thioindigo-based pigments, perinone-based pigments, perylene-based pigments, phthalocyanine-based pigments, halogenated phthalocyanine-based pigments, indoline-based pigments, isoindoline-based pigments, isoindolinone-based pigments, indanthrone-based pigments, dioxazine-based pigments, quinophthalone pigments, nickel azo pigments, metal complex pigments, azo-based pigments (insoluble azo-based pigment, soluble azo-based pigment, high molecular weight azo-based pigment, and azomethine azo-based black pigment), and aniline black-based pigments.

From the viewpoint of more effectively suppressing light transmission for a long period of time and enhancing the conduction reliability of the resulting dimmer laminate, the colorant preferably contains an organic black pigment, titanium black particles, or carbon black particles, more preferably contains an organic black pigment, and still more preferably contains an azo-based pigment or a perylene-based pigment. From the viewpoint of easily controlling the lightness $L_0{}^*$ of the colored resin particles before light irradiation and the lightness $L_{540}{}^*$ of the colored resin particles after light irradiation within suitable ranges, the colorant preferably contains an azo-based pigment, titanium black particles, or carbon black particles.

The average particle diameter of the organic black pigment is preferably 1 nm or more, more preferably 10 nm or more, and preferably 500 nm or less, more preferably 300 nm or less, still more preferably 100 nm or less. The average particle diameter indicates a weight average particle diameter. The average particle diameter can be measured by a dynamic light scattering method using a laser as a light source using a light scattering measuring device. Examples of the light scattering measuring device include "DLS-6000AL" manufactured by Otsuka Electronics Co., Ltd.

The colored resin particles preferably contain the colorant in an amount of 20% by weight or less in 100% by weight of the colored resin particles. The content of the colorant in 100% by weight of the colored resin particles is preferably 0.5% by weight or more, more preferably 1.0% by weight or more, still more preferably 3.0% by weight or more, and preferably 20% by weight or less, more preferably 15% by weight or less, still more preferably 10% by weight or less. When the content of the colorant is equal to or more than the above lower limit, light transmission can be more effectively suppressed. When the content of the colorant is equal to or less than the above upper limit, the insulation reliability of the colored resin particle can be further enhanced, and as a result, the conduction reliability of the obtained dimmer laminate can be further enhanced. When the colored resin particle contains a plurality of colorants, the content of the colorant means the sum of the contents of the plurality of colorants.

<Other components>

The colored resin particles may contain other components as necessary. Examples of the other components include a polymerization initiator, a pigment dispersant, a resin particle dispersant, and a surfactant. One kind of the other components may be used alone, and two or more kinds thereof may be used in combination.

(dimmer laminate)

The dimmer laminate according to the present invention includes a first base material, a second base material, and a dimming layer disposed between the first base material and the second base material. In the dimmer laminate according to the present invention, the dimming layer contains the colored resin particles.

Since the dimmer laminate according to the present invention is provided with the above configuration, the gap between the base materials can be controlled with high accuracy, and the conduction reliability of the obtained dimmer laminate can be enhanced.

The dimmer laminate may be a PDLC (Polymer Dispersed Liquid Crystal) type dimmer laminate or a SPD (Suspended Particle Device) type dimmer laminate. The dimmer laminate is preferably the SPD-type or PDLC-type dimmer laminate. From the viewpoint of more effectively exhibiting the effect of the present invention, the dimmer laminate is more preferably the PDLC-type dimmer laminate. The dimmer laminate may not be a liquid crystal display device.

The dimmer laminate may or may not have a curved surface portion. The dimmer laminate preferably has a curved surface portion. The dimmer laminate may have a bent shape or a curved shape. The dimmer laminate preferably has a bent shape or a curved shape, and is preferably used in a bent shape or a curved shape. The dimmer laminate may have a bent portion or a curved portion. The dimmer laminate, the first base material, and the second base material preferably have flexibility so that they can have a bent shape or a curved shape. When the dimmer laminate has a curved surface portion, a curvature of the curved surface portion of the dimmer laminate is preferably 300R or more and 1800R or less. Even when the dimmer laminate has a curved surface portion or the curvature of the curved surface portion of the dimmer laminate satisfies the above-described preferable aspect, by using the adhesive particles according to the present invention, it is possible to control the gap between the substrates with high accuracy and to suppress light transmission over the entire dimmer laminate.

The dimmer laminate is preferably used for a vehicle window glass, a partition, or the like. Examples of the vehicle include a vehicle, a ship, and an aircraft. The dimmer laminate is preferably used for a window glass of a vehicle such as a vehicle, a ship, or an aircraft, a partition, or the like. The dimmer laminate is preferably a window glass or a partition, and more preferably a window glass or a partition of a vehicle such as a vehicle, a ship, or an aircraft. The dimmer laminate may be a window glass of a vehicle such as a vehicle, a ship, or an aircraft, or may be a partition. The vehicle is preferably a transportation system. The partition may be a member that is disposed between seats of a vehicle and partitions the seats.

Next, specific embodiments of the present invention will be described with reference to the drawings.

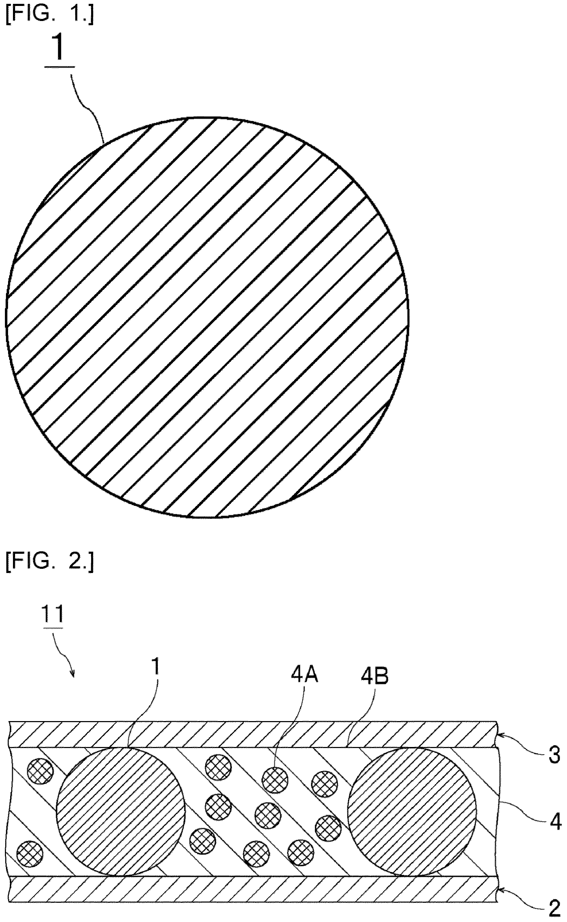

Fig. 1 is a sectional view schematically showing a colored resin particle according to a first embodiment of the present invention.

A colored resin particle 1 contains a resin particle and a colorant. In the colored resin particle 1, when a lightness in an L*a*b* color system in accordance with JIS Z 8781-4: 2013 is measured for each of the colored resin particle before light irradiation and the colored resin particle after light irradiation irradiated with light at an integrated light amount of 540 MJ/m$^2$, a lightness $L_0^*$ of the colored resin particle before light irradiation is 0 or more and 60 or less. In the colored resin particle 1, in the above measurement, a ratio of the lightness $L_0^*$ of the colored resin particle before light irradiation to a lightness $L_{540}^*$ of the colored resin particle after light irradiation is 0.3 or more.

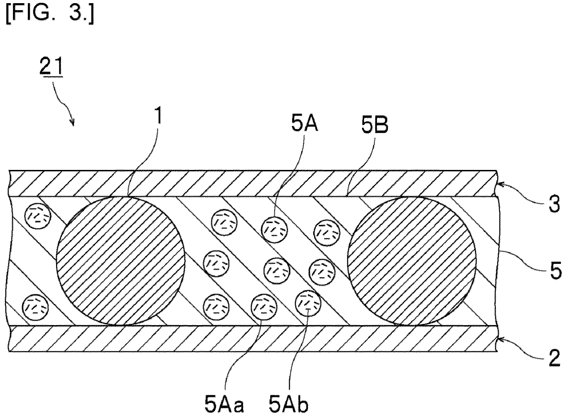

Fig. 2 is a sectional view schematically showing a PDLC-type dimmer laminate containing the colored resin particles according to the first embodiment of the present invention. Fig. 3 is a sectional view schematically showing an SPD-type dimmer laminate containing the colored resin particles according to the first embodiment of the present invention. In Figs. 2 and 3, the size, thickness, shape, addition amount, etc. of a dimming layer and a colored resin particle are appropriately changed from the actual size and shape for convenience of illustration.

A PDLC-type dimmer laminate 11 shown in Fig. 2 includes a first base material 2, a second base material 3, and a dimming layer 4. The dimming layer 4 is sandwiched between the first base material 2 and the second base material 3. The dimming layer 4 is disposed between the first base material 2 and the second base material 3. Between the first base material 2 and the second base material 3, a sealing agent may be disposed around the dimming layer 4.

The dimming layer 4 includes the colored resin particle 1, a liquid crystal capsule 4A, and a binder 4B. The liquid crystal capsule 4A is a liquid crystal material. The liquid crystal capsule 4A is dispersed in the binder 4B. The liquid crystal capsule 4A is held in a capsule form in the binder 4B. The liquid crystal material may be dispersed in the binder in the form of a capsule and may be dispersed in the binder as a continuous phase.

The colored resin particle 1 is in contact with the first base material 2 and the second base material 3. The colored resin particle 1 controls a gap between the first base material 2 and the second base material 3.

Electrodes are formed on the surface of the first base material 2 and on the surface of the second base material 3 (not shown). Examples of the material for the electrode include indium tin oxide (ITO). The electrode is preferably a transparent electrode.

In the state where no electric field is applied to the PDLC-type dimmer laminate 11, the alignment of the liquid crystal molecules in the liquid crystal capsule 4A is not uniform, so that incident light is scattered in the binder 4B due to a difference in refractive index between the binder 4B and the liquid crystal material, and an opaque state is shown.

When an electric field is applied to the PDLC-type dimmer laminate 11, the liquid crystal molecules in the liquid crystal capsule 4A are arranged in a direction parallel to the electric field. In this state, since the refractive indexes of the binder 4B and the liquid crystal material are equal, light can be transmitted, and a transparent state is obtained.

A SPD-type dimmer laminate 21 shown in Fig. 3 includes the first base material 2, the second base material 3, and a dimming layer 5. The dimming layer 5 is sandwiched between the first base material 2 and the second base material 3. The dimming layer 5 is disposed between the first base material 2 and the second base material 3.

The dimming layer 5 includes the colored resin particle 1, droplets 5A of a light-modulating suspension, and a resin matrix 5B. The droplets 5A of the light-modulating suspension are dispersed in the resin matrix 5B. The droplet 5A of the light-modulating suspension is held in a droplet state in the resin matrix 5B.

The droplet 5A of the light-modulating suspension includes a dispersion medium 5Aa and light-modulating particles 5Ab. The light-modulating particles 5Ab are dispersed in the dispersion medium 5Aa.

The colored resin particle 1 is in contact with the first base material 2 and the second base material 3. The colored resin particle 1 controls a gap between the first base material 2 and the second base material 3.

Electrodes are formed on the surface of the first base material 2 and on the surface of the second base material 3 (not shown). Examples of the material for the electrode include indium tin oxide (ITO). The electrode is preferably a transparent electrode.

In the state where no electric field is applied to the SPD-type dimmer laminate 21, incident light is absorbed, scattered or reflected in the light-modulating particles 5Ab by Brownian motion of the light-modulating particles 5Ab dispersed in the dispersion medium 5Aa included in the droplet 5A of the light-modulating suspension, and cannot be transmitted through the dimming layer 5.

When an electric field is applied to the SPD-type dimmer laminate 21, the light-modulating particles 5Ab are arranged in a direction parallel to the electric field. Thus, incident light can pass between the arranged light-modulating particles 5Ab, and can be transmitted through the dimming layer 5.

<Dimming layer>

The dimming layer preferably has a dimming property. The dimming property is a property where the visible light transmittance changes depending on whether or not an electric field is applied, and the amount of incident light can be adjusted. The dimming layer contains the colored resin particles.

(PDLC type)

The dimming layer preferably further includes a binder and a liquid crystal material dispersed in the binder.

The liquid crystal material is not particularly limited, and may be any liquid crystal material as long as the liquid crystal material has a property that its alignment changes depending on application of an electric field. The liquid crystal material may be dispersed as a continuous phase in the binder, or may be dispersed in the binder in a liquid crystal drop shape or a liquid crystal capsule shape. Examples of the liquid crystal material include nematic liquid crystal and cholesteric liquid crystal.

Examples of the material of the nematic liquid crystal include a cyanobiphenyl series, a phenyl ester series, an azoxybenzene series, a fluorine-containing biphenyl series, a carbonate ester series, and a Schiff base series. One kind of the nematic liquid crystal materials may be used alone, and two or more kinds thereof may be used in combination.

Examples of materials of the cholesteric liquid crystal include a steroid cholesterol derivative, a nematic liquid crystal such as a Schiff base series, an azo series, an azoxy series, a benzoate ester series, a biphenyl series, a terphenyl series, a cyclohexylcarboxylate ester series, a phenylcyclohexane series, a biphenylcyclohexane series, a pyrimidine series, a dioxane series, a cyclohexylcyclohexane ester series, a cyclohexylethane series, a cyclohexane series, a tolan series, an alkenyl series, a stilbene series and a condensed polycyclic series, smectic liquid crystal, and materials obtained by adding a chiral component including an optically active material such as a Schiff base series, an azo series, an ester series, and a biphenyl series to mixed liquid crystals thereof. One kind of the cholesteric liquid crystal materials may be used alone, and two or more kinds thereof may be used in combination.

The binder holds the liquid crystal material and suppresses the flow of the liquid crystal material. The binder is not particularly limited as long as it does not dissolve in the liquid crystal material, has a strength that can withstand external force, and has high transparency to reflected light and incident light. Examples of materials for the binder include water-soluble polymer materials such as gelatin, polyvinyl alcohol, cellulose derivatives, polyacrylic acid polymers, ethyleneimine, polyethylene oxide, polyacrylamide, polystyrene sulfonate, polyamidine, and isoprene sulfonic acid polymers, and materials that can be made into an aqueous emulsion such as a fluororesin, a silicone resin, an acrylic resin, a urethane resin, and an epoxy resin. One kind of the materials for the binder may be used alone, and two or more kinds thereof may be used in combination.

The binder is preferably cross-linked with a cross-linking agent. The cross-linking agent is not particularly limited as long as it is one in which crosslinking is formed between the binders and which hardens the binder, makes the binder hardly soluble, or makes the binder insoluble. Examples of the cross-linking agent include acetaldehyde, glutaraldehyde, glyoxal, potassium alum hydrate of a multivalent metal salt compound, adipic acid dihydrazide, melamine formalin oligomer, ethylene glycol diglycidyl ether, polyamide epichlorohydrin, and polycarbodiimide. One kind of the crosslinking agents may be used alone, and two or more kinds thereof may be used in combination.

(SPD type)

The dimming layer preferably further includes a resin matrix and a light-modulating suspension dispersed in the resin matrix.

The light-modulating suspension includes a dispersion medium and light-modulating particles dispersed in the dispersion medium.

Examples of the light-modulating particles include carbon-based materials such as polyiodide and carbon black, metal materials such as copper, nickel, iron, cobalt, chromium, titanium, and aluminum, and inorganic compound materials such as silicon nitride, titanium nitride, and aluminum oxide. These materials may be particles coated with a polymer. One kind of the light-modulating particles may be used alone, and two or more kinds thereof may be used in combination.

The dispersion medium disperses the light-modulating particles in a flowable state. Preferably, the dispersion medium is preferably a material that selectively adheres to the light-modulating particles to cover the light-modulating particles, acts to cause the light-modulating particles to be shifted to the phase-separated droplet phase at the time of phase separation from the resin matrix, has no electrical conductivity, and has no affinity with the resin matrix. Furthermore, the dispersion medium is preferably a liquid copolymer having a refractive index approximate to that of the resin matrix when the dispersion medium is made into a dimmer laminate. As the liquid copolymer, preferred is a (meth)acrylic acid ester oligomer having a fluoro group or a hydroxyl group, and more preferred is a (meth)acrylic acid ester oligomer having a fluoro group and a hydroxyl group. When such a copolymer is used, the monomer units of either the fluoro group or the hydroxyl group are faced toward the light-modulating particles, and the remaining monomer units stabilizes droplets of the light-modulating suspension in the resin matrix. Therefore, the light-modulating particles are easily dispersed in the light-modulating suspension, and at the time of the phase separation from the resin matrix, the light-modulating particles are easily introduced into the phase-separated droplets.

Examples of the (meth)acrylic acid ester oligomer having the fluoro group or the hydroxyl group include 2,2,2-trifluoroethyl methacrylate/butyl acrylate/2-hydroxyethyl acrylate copolymer, 3,5,5-trimethylhexyl acrylate/2-hydroxypropyl acrylate/fumaric acid copolymer, butyl acrylate/2-hydroxyethyl acrylate copolymer, 2,2,3,3-tetrafluoropropyl acrylate/butyl acrylate/2-hydroxyethyl acrylate copolymer, 1H,1H,5H-octafluoropentyl acrylate/butyl acrylate/2-hydroxyethyl acrylate copolymer, 1H,1H,2H,2H-heptadecafluorodecyl acrylate/butyl acrylate/2-hydroxyethyl acrylate copolymer, 2,2,2-trifluoroethyl methacrylate/butyl acrylate/2-hydroxyethyl acrylate copolymer, 2,2,3,3-tetrafluoropropyl methacrylate/butyl acrylate/2-hydroxyethyl acrylate copolymer, 1H,1H,5H-octafluoropentyl methacrylate/butyl acrylate/2-hydroxyethyl acrylate copolymer, 1H,1H,2H,2H-heptadecafluorodecyl methacrylate/butyl acrylate/2-hydroxyethyl acrylate copolymer. These (meth)acrylic acid ester oligomers have each preferably both of the fluoro group and the hydroxyl group.

The weight average molecular weight of the (meth)acrylic ester oligomer is preferably 1000 or more, more preferably 2000 or more, and preferably 20000 or less, more preferably 10000 or less.

The dimming layer can be produced using a resin material for forming the resin matrix and the light-modulating suspension.

The resin material is preferably a resin material cured by irradiation with energy rays. Examples of the resin material cured by irradiation with energy rays include a polymeric composition containing a photopolymerization initiator, and a polymeric compound curable by an energy ray such as ultraviolet rays, visible rays or an electron ray. Examples of the polymeric composition include a polymeric composition containing a polymerizable monomer having an ethylenically unsaturated group and a photopolymerization initiator. Examples of the polymerizable monomer having an ethylenically unsaturated group include non-crosslinkable monomers and crosslinkable monomers.

Examples of the non-crosslinkable monomer include the non-crosslinkable monomers described above. Examples of the crosslinkable monomer include the crosslinkable monomers described above.

Examples of the photopolymerization initiator include 2,2-dimethoxy-1,2-diphenylethane-1-one, 1-(4-(2-hydroxyethoxy)phenyl)-2-hydroxy-2-methyl-1-propane-1-one, bis(2,4,6-trimethylbenzoyl)phenylphosphine oxide, 2-hydroxy-2-methyl-1-phenylpropan-1-one, and (1-hydroxycyclohexyl) phenyl ketone.

The resin material may contain an organic solvent soluble resin, a thermoplastic resin, poly(meth)acrylic acid, and the like. Furthermore, the resin material may contain various additives, such as a coloring inhibitor, antioxidant, and adhesiveness imparting agent, and may contain a solvent.

<First base material and second base material>

The first base material is preferably a transparent base material. The second base material is preferably a transparent base material. The transparent base material is, for example, a base material having light-transmitting properties (light-transmitting base material). For example, light is transmitted from one side of the transparent base material to the other side through the transparent base material. For example, when a material on one side of the transparent base material is visually observed from the other side of the transparent base material through the transparent base material, the material can be visually recognized. The term transparent includes, for example, translucent. The transparent base material may be colorless and transparent, or colored and transparent.

The materials for the first base material and the second base material are not particularly limited. The material for the first base material may be the same as or different from the material for the second base material. Examples of the material for the first base material and the second base material include glass and a resin film. Examples of the glass include soda-lime glass for general construction, lead glass, borosilicate glass, glass having various compositions in other applications, and functional glass such as heat reflection glass, heat absorption glass, and tempered glass. Examples of the resin film include polyester films such as polyethylene terephthalate, polyolefin films such as polypropylene, and resin films such as acrylic resin films. Since the transparency, formability, bondability, workability, and others are excellent, the first base material and the second base material are preferably resin base materials, more preferably resin films, further preferably polyethylene terephthalate films.

The first base material and the second base material preferably include a base material body and a conductive film formed on a surface of the base material body so that an electric field for dimming can be applied. Examples of the conductive film include indium tin oxide (ITO), $SnO_2$, and $In_2O_3$. The conductive film is preferably a transparent conductive film.

From the viewpoint of further improving visibility of the dimmer laminate, visible light transmittance of the first base material and the second base material is preferably 75% or more, more preferably 80% or more.

The visible light transmittance of the first base material and the second base material can be measured in accordance with ISO13837:2008 by performing spectroscopic measurement or the like.

The present invention will be specifically described below by way of Examples and Comparative Examples. The present invention is not limited only to the following Examples.

The following materials were provided.

(Colorant):

Carbon black (inorganic black pigment)
Titanium black (inorganic black pigment)
Azo-based pigment (organic black pigment)

(Material of resin particle):

Styrene
Divinylbenzene (purity: 96% by weight, "DVB 960" manufactured by NIPPON STEEL Chemical & Material Co., Ltd.)
Polytetramethylene glycol diacrylate (polyfunctional (meth)acrylate compound, "PTMGA 250" manufactured by Kyoeisha Chemical Co., Ltd.)
Pentaerythritol tetraacrylate (polyfunctional (meth)acrylate compound, "A-TMMT" manufactured by Shin-Nakamura Chemical Co, Ltd.)

(1) Preparation of colored resin particle

(Example 1)

To 30 parts by weight of divinylbenzene and 70 parts by weight of polytetramethylene glycol diacrylate, 5 parts by weight of carbon black was added and stirred to obtain a monomer mixed liquid. In a reaction kettle, 2000 parts by weight of a 2.5% by weight aqueous solution prepared by dissolving polyvinyl alcohol having a molecular weight of about 2000 in pure water were placed. The obtained monomer mixed solution was put therein and stirred to adjust the particle diameter so that monomer droplets would have a predetermined particle diameter. Next, heating was carried out at 90°C for 9 hours, and a polymerization reaction of monomer droplets was carried out to obtain particles. The obtained particles were washed with hot water and acetone several times, respectively, and then classified to recover colored resin particles.

(Examples 2 to 15)

Colored resin particles were prepared in the same manner as in Example 1 except that the materials and contents (% by weight) of the colorant and the resin particles were changed as shown in Tables 1 to 4.

(Comparative Example 1)

Resin particles were prepared in the same manner as in Example 1 except that the material and content (% by weight) of the resin particles were changed as shown in Table 4. In Comparative Example 1, no colorant was used.

For the colored resin particles of Examples 1 to 15 and the resin particles of Comparative Example 1, the following dimmer laminate was produced.

(2) Production of dimmer laminate

SPD-type dimmer laminate:

A dimming film in which a known SPD layer was disposed was produced except that 5% by weight of the obtained colored resin particles or the resin particles of Comparative Example 1 was dispersed between two PET films on which ITO having transparency and conductivity was deposited. The dimming film was sandwiched between two transparent glasses to produce a SPD-type dimmer laminate.

PDLC-type dimmer laminate:

A dimming film in which a known PDLC layer was disposed was produced except that 5% by weight of the obtained colored resin particles or the resin particles of Comparative Example 1 was dispersed between two PET films on which ITO having transparency and conductivity was deposited. The dimming film was sandwiched between two transparent glasses to produce a PDLC-type dimmer laminate.

(Evaluation)

(1) Average particle diameter

With respect to the obtained colored resin particles and the resin particles of Comparative Example 1, the particle diameter of about 100,000 particles was measured using a particle size distribution measuring device ("Multisizer 4" manufactured by Beckman Coulter, Inc.), and the average particle diameter and the standard deviation were measured. The content (ppm) of particles (colored resin particles or resin particles) having a particle diameter of 1.2 times or more the average particle diameter was measured by the method described above.

(2) CV value of particle diameter

For the obtained colored resin particles and the resin particles of Comparative Example 1, the CV value of the particle diameter was calculated by the method described above.

(3) Specific gravity

With respect to the obtained colored resin particles and the resin particles of Comparative Example 1, the specific gravity was measured using "AccuPyc II 1345 Series" manufactured by Shimadzu Corporation.

(4) Lightness

100 mg of the obtained colored resin particles and the resin particles of Comparative Example 1 were thinly spread on an adhesive tape (length: 75 mm, width: 15 mm) attached to a slide glass, and air blowing was performed for 30 seconds to prepare a sample carrying the colored resin particles. The sample was irradiated with light at an illuminance of 255 $W/m^2$ for 588 hours (integrated light amount: 540 $MJ/m^2$) using a sunshine carbon arc clamp. For the sample before light irradiation and arbitrary 10 points of the sample after light irradiation, the lightness was measured with a measurement range set to a circle having a diameter of 8 mm using a color difference meter ("TES-3250" manufactured by SATOTECH (Sato Shouji Inc.)), and the average value lightness $L_0^*$ and the lightness $L_{540}^*$ were obtained. The ratio ($L_0^*/L_{540}^*$) was determined.

(5) 20% K value

For the obtained colored resin particles and the resin particles of Comparative Example 1, the 20% K value was measured by the above-described method using "Fischer Scope H-100" manufactured by FISCHER INSTRUMENTS K.K.

(6) Light transmission suppression property

Using the obtained colored resin particles as a spacer for a twisted nematic (TN) type liquid crystal display element, the TN type liquid crystal display element was produced by the following method.
An $SiO_2$ film was deposited on one surface of each of the first and second transparent base materials (transparent glass plate, 150 mm × 150 mm) by a CVD method, and then an ITO film was formed on the entire surface of the $SiO_2$ film by sputtering. Thereafter, a polyimide alignment film ("SE-7210" manufactured by Nissan Chemical Corporation) was disposed by a spin coating method, and fired at 280°C for 90 minutes to form a polyimide alignment film. Then, after rubbing treatment, the obtained colored resin particles were sprayed onto the alignment film side of the first transparent base material using a dry sprayer ("DISPA-μP" manufactured by Nisshin Engineering Inc.) so as to be 20 to 100 particles per $mm^2$. A peripheral sealant (main agent: SE4500, curing agent: manufactured by HAVEN CHEMICAL) was formed around the second transparent base material and then disposed so as to face so that a rubbing direction (twist angle) was 90°, and after the first transparent base material and the second transparent base material were bonded to each other, treatment was performed at 160°C for 90 minutes to cure the sealant, and thus to prepare an empty cell. A TN type liquid crystal ("MLC-6222" manufactured by Merck KGaA) was injected into the obtained empty cell, and then an injection port was closed with an adhesive ("Photolec A-780" manufactured by Sekisui Chemical Co., Ltd.) to prepare a TN type liquid crystal display element, and the TN type liquid crystal display element was heat-treated at 120°C for 30 minutes.

The resulting TN type liquid crystal display element was sandwiched between polarizing films arranged in crossed Nicols so as to be in a normally white display mode, and the state of light transmission of the colored resin particles was observed using a digital microscope ("VHX-2000" manufactured by KEYENCE CORPORATION) while applying a voltage of 7 V. The image magnification was set to 200 times, and a ratio of the number of colored resin particles in which light transmission occurred in arbitrary five fields of view was calculated. For the resin particles of Comparative Example 1, the calculation was performed in the same manner. The light transmission suppression property was assessed according to the following criteria.

[Assessment criteria for light transmission suppression property]

$\bigcirc\bigcirc$: The ratio of the number of colored resin particles in which light transmission occurs is less than 1%.
$\bigcirc$: The ratio of the number of colored resin particles in which light transmission occurs is 1% or more and less than 3%.
$\triangle$: The ratio of the number of colored resin particles in which light transmission occurs is 3% or more and less than 5%.
$\times$: The ratio of the number of colored resin particles in which light transmission occurs is 5% or more.

(7) Breakage inhibitory property of colored resin particle

The obtained dimmer laminate was pressurized at 2 kg/cm$^2$ for 10 minutes, then observed using a digital microscope ("VHX-2000" manufactured by Keyence Corporation), and a ratio of the number of broken colored resin particles was calculated. The breakage inhibitory property of the colored resin particle was assessed according to the following criteria.

[Assessment criteria for breakage inhibitory property of colored resin particle]

$\bigcirc\bigcirc$: The ratio of the number of broken colored resin particles is less than 0.01%.
$\bigcirc$: The ratio of the number of broken colored resin particles is 0.01% or more and less than 0.1%.
$\triangle$1: The ratio of the number of broken colored resin particles is 0.1% or more and less than 0.5%.
$\triangle$2: The ratio of the number of broken colored resin particles is 0.5% or more and less than 1.0%.
$\times$: The ratio of the number of broken colored resin particles is 1.0% or more.

(8) Conduction reliability of dimmer laminate

In the obtained dimmer laminate, connection resistance between upper and lower electrodes was measured by a four-terminal method, and an average value of the connection resistances was calculated. From the relationship of voltage = current $\times$ resistance, the connection resistance can be obtained by measuring the voltage when a constant current flows. The conduction reliability of the dimmer laminate was assessed according to the following criteria.

[Assessment criteria for conduction reliability of dimmer laminate]

$\bigcirc\bigcirc$: Connection resistance is $1.0 \times 10^{10}$ $\Omega/\square$ or more
$\bigcirc$: Connection resistance is $1.0 \times 10^{9}$ $\Omega/\square$ or more and less than $1.0 \times 10^{10}$ $\Omega/\square$
$\triangle$1: Connection resistance is $1.0 \times 10^{8}$ $\Omega/\square$ or more and less than $1.0 \times 10^{9}$ $\Omega/\square$
$\triangle$2: Connection resistance is $1.0 \times 10^{7}$ $\Omega/\square$ or more and less than $1.0 \times 10^{8}$ $\Omega/\square$
$\times$: Connection resistance is less than $1.0 \times 10^{7}$ $\Omega/\square$.

(9) Gap controllability

For the obtained dimmer laminate, the maximum value and the minimum value of a distance between the base materials (transparent glass) were measured. The gap controllability was assessed according to the following criteria.

[Assessment criteria for gap controllability]

○○: The maximum value of the distance between the base materials is less than 1.05 times the minimum value.
○: The maximum value of the distance between the base materials is 1.05 times or more and less than 1.10 times the minimum value.
△1: The maximum value of the distance between the base materials is 1.10 times or more and less than 1.15 times the minimum value.
△2: The maximum value of the distance between the base materials is 1.15 times or more and less than 1.20 times the minimum value.
×: The maximum value of the distance between the base materials is 1.20 times or more the minimum value.

The composition and results of the colored resin particles are shown in Tables 1 to 4 below.

[Table 1]

| | | | | Example 1 | Example 2 | Example 3 | Example 4 |
|---|---|---|---|---|---|---|---|
| Colored resin particle | Colorant | Carbon black | wt% | 4.8 | - | - | - |
| | | Titanium black | wt% | - | 4.8 | - | - |
| | | Azo-based pigment | wt% | - | - | 4.8 | 4.8 |
| | Resin particle | Styrene | wt% | - | - | - | - |
| | | Divinylbenzene | wt% | 28.6 | 28.6 | 28.6 | 28.6 |
| | | Polytetramethylene glycol diacrylate | wt% | 66.7 | 66.7 | 66.7 | 66.7 |
| | | Pentaerythritol tetraacrylate | wt% | - | - | - | - |
| | Average particle diameter | | $\mu$m | 20 | 20 | 20 | 20 |
| | Content of particles having particle diameter of 1.2 times or more average particle diameter | | ppm | 10 | 10 | 10 | 10 |
| | CV value of particle diameter | | % | 4 | 4 | 4 | 4 |
| | Specific gravity | | - | 1.16 | 1.23 | 1.17 | 1.14 |
| | Lightness | $L_0^*$ | - | 21.39 | 24.94 | 22.34 | 23.08 |
| | | $L_{540}^*$ | - | 22.67 | 30.81 | 27.88 | 24.53 |
| | | $L_0^*/L_{540}^*$ | - | 0.94 | 0.81 | 0.80 | 0.94 |
| | 20% K value | | N/mm$^2$ | 1610 | 1450 | 1270 | 1080 |
| | Volume resistivity | | $\Omega\cdot$cm | $1.0\times10^{11}$ | $1.0\times10^{12}$ | $1.0\times10^{15}$ | $1.0\times10^{15}$ |

(continued)

|  |  |  | | Example 1 | Example 2 | Example 3 | Example 4 |
|---|---|---|---|---|---|---|---|
| Evaluation | Presence or absence of colorant | | - | Presence | Presence | Presence | Presence |
| | Light transmission suppression property | | - | ○○ | ○○ | ○○ | ○○ |
| | Breakage inhibitory property of colored resin particle | | - | ○○ | ○○ | ○○ | ○○ |
| | Conduction reliability of dimmer laminate | | - | ○ | ○ | ○○ | ○○ |
| | Gap controllability | | - | ○○ | ○○ | ○○ | ○○ |

[Table 2]

|  |  |  | | Example 5 | Example 6 | Example 7 | Example 8 |
|---|---|---|---|---|---|---|---|
| Colored resin particle | Colorant | Carbon black | wt% | - | - | - | - |
| | | Titanium black | wt% | - | - | - | - |
| | | Azo-based pigment | wt% | 4.8 | 4.8 | 4.8 | 4.8 |
| | Resin particle | Styrene | wt% | 47.6 | 19.0 | 23.8 | 9.5 |
| | | Divinylbenzene | wt% | - | 9.5 | 23.8 | 38.1 |
| | | Polytetramethylene glycol diacrylate | wt% | 47.6 | 66.7 | - | - |
| | | Pentaerythritol tetraacrylate | wt% | - | - | 47.6 | 47.6 |
| | Average particle diameter | | $\mu$m | 20 | 20 | 20 | 20 |
| | Content of particles having particle diameter of 1.2 times or more average particle diameter | | ppm | 10 | 10 | 10 | 10 |
| | CV value of particle diameter | | % | 4 | 4 | 4 | 4 |
| | Specific gravity | | - | 1.17 | 1.17 | 1.17 | 1.17 |
| | Lightness | $L_0{}^*$ | - | 22.34 | 22.34 | 22.34 | 22.34 |
| | | $L_{540}{}^*$ | - | 27.88 | 27.88 | 27.88 | 27.88 |
| | | $L_0{}^*/L_{540}{}^*$ | - | 0.80 | 0.80 | 0.80 | 0.80 |
| | 20% K value | | N/mm$^2$ | 300 | 700 | 3500 | 4500 |
| | Volume resistivity | | $\Omega \cdot$cm | $1.0 \times 10^{12}$ | $1.0 \times 10^{12}$ | $1.0 \times 10^{12}$ | $1.0 \times 10^{12}$ |
| Evaluation | Presence or absence of colorant | | - | Presence | Presence | Presence | Presence |
| | Light transmission suppression property | | - | ○○ | ○○ | ○○ | ○○ |
| | Breakage inhibitory property of colored resin particle | | - | ○○ | ○○ | ○ | Δ1 |
| | Conduction reliability of dimmer laminate | | - | ○ | ○ | Δ1 | Δ1 |
| | Gap controllability | | - | ○○ | ○○ | ○ | ○ |

[Table 3]

| | | | | Example 9 | Example 10 | Example 11 | Example 12 |
|---|---|---|---|---|---|---|---|
| Colored resin particle | Colorant | Carbon black | wt% | - | - | - | - |
| | | Titanium black | wt% | - | - | - | - |
| | | Azo-based pigment | wt% | 0.1 | 1.0 | 4.8 | 4.8 |
| | Resin particle | Styrene | wt% | - | - | - | - |
| | | Divinylbenzene | wt% | 30.0 | 29.7 | 28.6 | 28.6 |
| | | Polytetramethylene glycol diacrylate | wt% | 69.9 | 69.3 | 66.7 | 66.7 |
| | | Pentaerythritol tetraacrylate | wt% | - | - | - | - |
| | Average particle diameter | | $\mu$m | 20 | 20 | 20 | 20 |
| | Content of particles having particle diameter of 1.2 times or more average particle diameter | | ppm | 10 | 10 | 100 | 1000 |
| | CV value of particle diameter | | % | 4 | 4 | 4 | 4 |
| | Specific gravity | | - | 1.17 | 1.17 | 1.17 | 1.17 |
| | Lightness | $L_0^*$ | - | 27.42 | 24.73 | 22.34 | 22.34 |
| | | $L_{540}^*$ | - | 51.26 | 31.94 | 27.88 | 27.88 |
| | | $L_0^*/L_{540}^*$ | - | 0.53 | 0.77 | 0.80 | 0.80 |
| | 20% K value | | N/mm$^2$ | 1270 | 1270 | 1450 | 1450 |
| | Volume resistivity | | $\Omega\cdot$cm | $1.0\times10^{12}$ | $1.0\times10^{12}$ | $1.0\times10^{12}$ | $1.0\times10^{12}$ |
| Evaluation | Presence or absence of colorant | | - | Presence | Presence | Presence | Presence |
| | Light transmission suppression property | | - | Δ | ○ | ○○ | ○○ |
| | Breakage inhibitory property of colored resin particle | | - | ○○ | ○○ | ○○ | ○○ |
| | Conduction reliability of dimmer laminate | | - | ○ | ○ | ○ | ○ |
| | Gap controllability | | - | ○○ | ○○ | ○ | Δ1 |

[Table 4]

| | | | Example 13 | Example 14 | Example 15 | Comparative Example 1 |
|---|---|---|---|---|---|---|
| Colorant | Carbon black | wt% | - | 4.8 | 20.0 | - |
| | Titanium black | wt% | - | - | - | - |
| | Azo-based pigment | wt% | 4.8 | - | - | - |
| Resin particle | Styrene | wt% | - | - | - | - |
| | Divinylbenzene | wt% | 28.6 | 38.1 | 40.0 | 50.0 |
| | Polytetramethylene glycol diacrylate | wt% | 66.7 | - | - | - |
| | Pentaerythritol tetraacrylate | wt% | - | 57.1 | 40.0 | 50.0 |
| Colored resin particle or resin particle | Average particle diameter | μm | 20 | 20 | 20 | 20 |
| | Content of particles having particle diameter of 1.2 times or more average particle diameter | ppm | 10000 | 10 | 10 | 10 |
| | CV value of particle diameter | % | 4 | 4 | 4 | 4 |
| | Specific gravity | - | 1.17 | 1.16 | 1.19 | 1.19 |
| | Lightness $L_0^*$ | - | 22.34 | 21.39 | 15.76 | 95 |
| | Lightness $L_{540}^*$ | - | 27.88 | 22.67 | 16.21 | 95 |
| | Lightness $L_0^*/L_{540}^*$ | - | 0.80 | 0.94 | 0.97 | 1.00 |
| | 20% K value | N/mm$^2$ | 1450 | 6060 | 4700 | 4400 |
| | Volume resistivity | Ω·cm | $1.0 \times 10^{12}$ | $1.0\text{-}10^{11}$ | $1.0\text{-}10^{9}$ | $1.0\text{-}10^{15}$ |
| Evaluation | Presence or absence of colorant | - | Presence | Presence | Presence | Absence |
| | Light transmission suppression property | - | ○○ | ○○ | ○○ | × |
| | Breakage inhibitory property of colored resin particle | - | ○ | Δ2 | Δ1 | - |
| | Conduction reliability of dimmer laminate | - | ○ | Δ1 | Δ2 | - |
| | Gap controllability | - | Δ2 | ○○ | ○○ | - |

In Comparative Example 1, since no colorant was contained, (7) Breakage inhibitory property of colored resin particle, (8) Conduction reliability of dimmer laminate, and (9) Gap controllability were not evaluated.

EXPLANATION OF SYMBOLS

1: Colored resin particle
2: First base material
3: Second base material
4, 5: Dimming layer
4A: Liquid crystal capsule
4B: Binder
5A: Droplet of light-modulating suspension
5Aa: Dispersion medium
5Ab: Light-modulating particle
5B: Resin matrix
11: PDLC-type dimmer laminate
21: SPD-type dimmer laminate

**Claims**

1. A colored resin particle comprising:

   a resin particle; and
   a colorant,
   when lightness in an L*a*b* color system in accordance with JIS Z 8781-4: 2013 is measured for each of the colored resin particle before light irradiation and the colored resin particle after light irradiation irradiated with light at an integrated light amount of 540 MJ/m$^2$, a lightness $L_0^*$ of the colored resin particle before light irradiation being 0 or more and 60 or less, and a ratio of the lightness $L_0^*$ of the colored resin particle before light irradiation to a lightness $L_{540}^*$ of the colored resin particle after light irradiation being 0.3 or more.

2. The colored resin particle according to claim 1, wherein a 20% K value is 100 N/mm$^2$ or more and 5000 N/mm$^2$ or less.

3. The colored resin particle according to claim 1 or 2, wherein a volume resistivity is $1.0 \times 10^9$ $\Omega \cdot$cm or more.

4. The colored resin particle according to any one of claims 1 to 3, wherein an average particle diameter is 1 $\mu$m or more and 150 $\mu$m or less.

5. The colored resin particle according to any one of claims 1 to 4, wherein particles having a particle diameter of 1.2 times or more the average particle diameter are not included, or the particles having a particle diameter of 1.2 times or more the average particle diameter are included in an amount of 1000 ppm or less.

6. The colored resin particle according to any one of claims 1 to 5, wherein a CV value of the particle diameter is 10% or less.

7. The colored resin particle according to any one of claims 1 to 6, wherein the colorant contains an organic black pigment, titanium black particles, or carbon black particles.

8. The colored resin particle according to any one of claims 1 to 7, wherein the colored resin particle contains the colorant in a content of 20% by weight or less in 100% by weight of the colored resin particles.

9. The colored resin particle according to any one of claims 1 to 8, wherein a specific gravity is 1.5 or less.

10. The colored resin particle according to any one of claims 1 to 9, further comprising a component derived from a polyfunctional (meth)acrylate compound.

**11.** The colored resin particle according to any one of claims 1 to 10, further comprising a component derived from a polyfunctional (meth)acrylate compound in a content of 50% by weight or more in 100% by weight of the colored resin particles.

**12.** The colored resin particle according to any one of claims 1 to 11, which is used as a spacer.

**13.** The colored resin particle according to claim 12, which is used as a spacer in a dimmer laminate.

**14.** A dimmer laminate comprising:

a first base material;
a second base material; and
a dimming layer disposed between the first base material and the second base material,
the dimming layer containing the colored resin particles according to any one of claims 1 to 13.

[FIG. 1.]

1

[FIG. 2.]

11

1    4A    4B

3

4

2

[FIG. 3.]

## INTERNATIONAL SEARCH REPORT

| International application No. |
|---|
| **PCT/JP2022/043024** |

**A.    CLASSIFICATION OF SUBJECT MATTER**

*G02F 1/1339*(2006.01)i; *C08F 2/44*(2006.01)i; *G02F 1/19*(2019.01)i
FI:    G02F1/1339 500; C08F2/44 Z; G02F1/19 501

According to International Patent Classification (IPC) or to both national classification and IPC

**B.    FIELDS SEARCHED**

Minimum documentation searched (classification system followed by classification symbols)

G02F1/1339; C08F2/44; G02F1/19

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2000-319529 A (HAYAKAWA RUBBER CO LTD) 21 November 2000 (2000-11-21) paragraphs [0009]-[0096] | 1-14 |
| Y | JP 2002-38048 A (DMC 2 DEGUSSA METALS CATALYSTS CERDEC AG) 06 February 2002 (2002-02-06) paragraphs [0002]-[0088], fig. 1-5 | 1-14 |

☐ Further documents are listed in the continuation of Box C.          ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
|---|---|
| **04 January 2023** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/JP2022/043024** |

| Patent document<br>cited in search report | Publication date<br>(day/month/year) | Patent family member(s) | Publication date<br>(day/month/year) |
| --- | --- | --- | --- |
| JP 2000-319529 A | 21 November 2000 | (Family: none) | |
| JP 2002-38048 A | 06 February 2002 | US 2002/0034644 A1<br>paragraphs [0003]-[0045]<br>EP 1162175 A1<br>paragraphs [0002]-[0066], fig.<br>1-5 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10010540 A

**Non-patent literature cited in the description**

- *CHEMICAL ABSTRACTS,* 79869-59-3
- *CHEMICAL ABSTRACTS,* 6358-69-6
- *CHEMICAL ABSTRACTS,* 12671-74-8
- *CHEMICAL ABSTRACTS,* 12271-01-1
- *CHEMICAL ABSTRACTS,* 8910-94-5
- *CHEMICAL ABSTRACTS,* 71902-17-5
- *CHEMICAL ABSTRACTS,* 13676091-0
- *CHEMICAL ABSTRACTS,* 15958-69-6
- *CHEMICAL ABSTRACTS,* 12236-11-2
- *CHEMICAL ABSTRACTS,* 81-48-1
- *CHEMICAL ABSTRACTS,* 6408-72-6
- *CHEMICAL ABSTRACTS,* 61969-44-6
- *CHEMICAL ABSTRACTS,* 37229-23-5
- *CHEMICAL ABSTRACTS,* 116-75-6
- *CHEMICAL ABSTRACTS,* 104491-84-1
- *CHEMICAL ABSTRACTS,* 3321-10-4
- *CHEMICAL ABSTRACTS,* 70956-30-8
- *CHEMICAL ABSTRACTS,* 88650-91-3